(19) **Europäisches Patentamt European Patent Office Office européen des brevets**

(11) **EP 4 269 953 B1**

(12) **FASCICULE DE BREVET EUROPEEN**

(45) Date de publication et mention de la délivrance du brevet:
**05.06.2024 Bulletin 2024/23**

(21) Numéro de dépôt: **23170583.1**

(22) Date de dépôt: **28.04.2023**

(51) Classification Internationale des Brevets (IPC):
**G01F 1/36** *(2006.01)*   **F16K 37/00** *(2006.01)*
**G01F 1/66** *(2022.01)*   **G01F 1/667** *(2022.01)*
**G01F 15/00** *(2006.01)*

(52) Classification Coopérative des Brevets (CPC):
**G01F 1/662; G01F 1/36; G01F 1/667; G01F 15/005**

(54) **MESURE DU DÉBIT À PARTIR DES IMPÉDANCES ÉLECTRIQUES DES TRANSDUCTEURS PIÉZOÉLECTRIQUES**

MESSUNG DES DURCHFLUSSES DURCH ELEKTRISCHE IMPEDANZEN PIEZOELEKTRISCHER WANDLER

MEASURING FLOW RATE FROM ELECTRICAL IMPEDANCES OF PIEZOELECTRIC TRANSDUCERS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.04.2022 FR 2204103**

(43) Date de publication de la demande:
**01.11.2023 Bulletin 2023/44**

(73) Titulaire: **Sagemcom Energy & Telecom SAS 92270 Bois-Colombes (FR)**

(72) Inventeurs:
• **SABRAOUI, Abbas 92500 RUEIL MALMAISON (FR)**
• **BASTURK, Ahmet Samed 92500 RUEIL MALMAISON (FR)**
• **ABID, Oussama 92500 RUEIL MALMAISON (FR)**

(74) Mandataire: **Cabinet Boettcher et al 5, rue de Vienne 75008 Paris (FR)**

(56) Documents cités:
**DE-A1-102019 105 948    US-A1- 2017 090 485 US-A1- 2022 049 478**

**Description**

L'invention concerne le domaine des compteurs de fluide à ultrasons.

ARRIERE PLAN DE L'INVENTION

Un compteur de fluide à ultrasons comporte très classiquement un conduit dans lequel circule le fluide, et un dispositif de mesure ultrasonique comprenant un transducteur amont (côté réseau) et un transducteur aval (côté installation de l'abonné). Chaque transducteur joue successivement le rôle d'un émetteur et d'un récepteur de signaux ultrasonores. Le transducteur amont émet ainsi un signal ultrasonore dans le conduit, qui est reçu par le transducteur aval après avoir parcouru dans le fluide un chemin prédéfini (de longueur parfaitement maîtrisée). Puis, le transducteur aval émet à son tour un signal ultrasonore, qui est reçu par le transducteur amont après avoir parcouru dans le fluide le chemin prédéfini (dans l'autre sens). Le dispositif de mesure ultrasonique évalue alors le débit du fluide à partir des temps de vol des signaux ultrasonores entre les transducteurs. L'estimation du débit du fluide permet d'évaluer et de facturer la quantité de fluide consommée.

Dans certains pays, les compteurs doivent être capables de limiter, réguler, et de couper le débit du fluide. Par exemple, dans certains pays et dans le cas d'une facture d'eau impayée, le distributeur d'eau doit assurer au client final « mauvais payeur » un débit minimal durant un certain nombre de jours avant de lui couper totalement l'accès à l'eau.

Ce débit minimal peut varier en fonction du pays et du client, et il est donc nécessaire d'avoir la possibilité de réguler le débit « à la demande » : le débit doit être adapté en fonction d'une consigne de débit.

On a envisagé, pour réaliser la régulation du débit, d'intégrer dans le conduit du compteur une vanne à bille motorisée. La position angulaire de la bille peut être commandée à distance pour réguler le débit.

Cependant, l'encombrement du compteur doit être limité, et il peut être nécessaire de positionner la vanne dans la zone de mesure du débit, c'est-à-dire entre les deux transducteurs.

Or, lorsque la vanne est insuffisamment ouverte, les signaux ultrasonores ne peuvent pas cheminer normalement dans le conduit en suivant le chemin prédéfini.

Il est donc impossible de mesurer et de réguler le débit pour certaines positions angulaires de la bille.

Le document DE102019105948 A1 décrit un compteur de fluide à ultrasons.

OBJET DE L'INVENTION

L'invention a pour objet, dans un compteur de fluide à ultrasons comprenant un conduit dans lequel circule le fluide et une vanne positionnée dans le conduit, de pouvoir mesurer et réguler le débit du fluide quel que soit l'état de la vanne (ouverte, fermée, partiellement ouverte).

RESUME DE L'INVENTION

En vue de la réalisation de ce but, on propose un compteur de fluide à ultrasons comportant :

- un conduit dans lequel un fluide peut circuler ;
- un dispositif de mesure ultrasonique comprenant transducteur amont et un transducteur aval qui sont des transducteurs piézoélectriques et qui sont agencés pour émettre et recevoir des signaux ultrasonores dans le conduit, le dispositif de mesure ultrasonique étant agencé pour évaluer un débit courant du fluide à partir de temps de vol des signaux ultrasonores entre le transducteur amont et le transducteur aval ;

- une vanne positionnée, selon une longueur du conduit, entre le transducteur amont piézoélectrique et le transducteur aval piézoélectrique, la vanne comprenant un organe mobile qui s'étend dans le conduit et dont une position courante peut être commandée pour contrôler le débit courant du fluide ;
- un capteur de position agencé pour mesurer la position courante de l'organe mobile ;
- un circuit de traitement agencé pour, si la position courante de l'organe mobile est telle que le débit courant ne peut pas être mesuré par le dispositif de mesure ultrasonique, évaluer le débit courant en fonction de la position courante de l'organe mobile et d'une valeur de pression représentative d'une différence entre une deuxième pression du fluide dans le conduit en aval de la vanne et une première pression du fluide dans le conduit en amont de la vanne, la première pression étant évaluée à partir d'une première impédance électrique du transducteur piézoélectrique amont et la deuxième pression étant évaluée à partir d'une deuxième impédance électrique du transducteur piézoélectrique aval.

Le compteur de fluide à ultrasons selon l'invention est donc particulièrement avantageux car, lorsque la position courante de l'organe mobile de la vanne est telle que le débit courant ne peut pas être mesuré via le dispositif de mesure ultrasonique, alors le débit courant est évalué en fonction de la position courante de l'organe mobile et d'une valeur de pression qui est calculée à partir de la première pression elle-même évaluée à partir de la première impédance électrique du transducteur amont, et de la deuxième pression elle-même évaluée à partir de la deuxième impédance électrique du transducteur aval. Dans ce cas, le compteur de fluide à ultrasons selon l'invention ne nécessite pas le dispositif de mesure ultrasonique pour fonctionner.

Le compteur de fluide à ultrasons selon l'invention est ainsi en mesure de mesurer et réguler le débit du fluide quel que soit l'état de la vanne (ouverte, fermée, partiellement ouverte).

Dans un mode de réalisation, la première impédance électrique est une impédance électrique du transducteur amont à une fréquence d'excitation du transducteur amont et du transducteur aval, et la deuxième impédance électrique est une impédance électrique du transducteur aval à ladite fréquence d'excitation.

Dans un mode de réalisation, le circuit de traitement est agencé pour :

- exciter le transducteur amont à des fréquences comprises dans un premier intervalle de fréquences prédéterminé pour évaluer une première fonction de la première impédance en fonction de la fréquence sur ledit premier intervalle ;
- exciter le transducteur aval à des fréquences comprises dans un deuxième intervalle de fréquences prédéterminé pour évaluer une deuxième fonction de la deuxième impédance en fonction de la fréquence sur ledit deuxième intervalle ;
- évaluer à partir de la première fonction un premier décalage, par rapport à une première fréquence de référence, d'une première fréquence de résonance ou d'une première fréquence d'antirésonance du transducteur amont ;
- évaluer à partir de la deuxième fonction un deuxième décalage, par rapport à une deuxième fréquence de référence, d'une deuxième fréquence de résonance ou d'une deuxième fréquence d'antirésonance du transducteur aval ;
- évaluer à partir du premier décalage la première pression, et à partir du deuxième décalage la deuxième pression.

Dans un mode de réalisation, le circuit de traitement est agencé pour, si la position courante de l'organe mobile est telle que le débit courant peut être mesuré par le dispositif de mesure ultrasonique :

- évaluer une pression du fluide à débit nul ;
- estimer la température du fluide en utilisant la pression du fluide à débit nul ;
- produire une première valeur de débit à partir de temps de vol des signaux ultrasonores entre le premier transducteur et le deuxième transducteur et de la température du fluide.

Dans un mode de réalisation, le circuit de traitement est en outre agencé pour :

- produire une deuxième valeur de débit à partir de la position courante de l'organe mobile et de la valeur de pression ;
- produire une valeur de débit consolidée à partir de la première valeur de débit et de la deuxième valeur de débit. Dans un mode de réalisation, le circuit de traitement est agencé, pour évaluer la pression du fluide à débit nul, pour :

  - attendre que le débit courant soit nul ;
  - évaluer alors la première pression à partir de la première impédance ou la deuxième pression à partir de la deuxième impédance.

Dans un mode de réalisation, le fluide est un fluide compressible, le compteur de fluide comprenant en outre un capteur de température agencé pour mesurer une température du fluide dans le conduit, le circuit de traitement étant agencé pour, si la position courante de l'organe mobile est telle que le débit courant ne peut pas être mesuré par le dispositif de mesure ultrasonique, utiliser aussi la température du fluide pour évaluer le débit courant.

Dans un mode de réalisation, la vanne est une vanne à bille.

On propose de plus un procédé de mesure d'un débit courant d'un fluide, mis en oeuvre dans le circuit de traitement d'un compteur de fluide à ultrasons tel que précédemment décrit, et comprenant l'étape, si la position courante de l'organe mobile est telle que le débit courant ne peut pas être mesuré par le dispositif de mesure ultrasonique, d'évaluer le débit courant en fonction de la position courante de l'organe mobile et de la valeur de pression représentative de la différence entre la deuxième pression et la première pression.

Dans un mode de réalisation, dans le procédé de mesure tel que précédemment décrit, la première impédance électrique est une impédance électrique du transducteur amont à une fréquence d'excitation du transducteur amont et du transducteur aval, et la deuxième impédance électrique est une impédance électrique du transducteur aval à ladite fréquence d'excitation.

Dans un mode de réalisation, le procédé de mesure tel que précédemment décrit comprend les étapes de :

- exciter le transducteur amont à des fréquences comprises dans un premier intervalle de fréquences prédéterminé et évaluer une première fonction de la première impédance en fonction de la fréquence sur ledit premier intervalle ;
- exciter le transducteur aval à des fréquences comprises dans un deuxième intervalle de fréquences prédéterminé et évaluer une deuxième fonction de la deuxième impédance en fonction de la fréquence sur ledit deuxième intervalle ;
- évaluer à partir de la première fonction un premier décalage, par rapport à une première fréquence de référence, d'une première fréquence de résonance ou d'une première fréquence d'antirésonance du transducteur amont ;
- évaluer à partir de la deuxième fonction un deuxième décalage, par rapport à une deuxième fréquence de référence, d'une deuxième fréquence de résonance ou d'une deuxième fréquence d'antirésonance du transducteur aval ;
- et évaluer à partir du premier décalage la première pression, et à partir du deuxième décalage la deuxième pression.

Dans un mode de réalisation, le procédé de mesure tel que précédemment décrit, comprend les étapes, si la position courante de l'organe mobile est telle que le débit courant peut être mesuré par le dispositif de mesure ultrasonique, de

- utiliser le dispositif de mesure ultrasonique pour mesurer le débit courant ;
- attendre que le débit courant soit nul ;
- évaluer alors la première pression à partir de la première impédance ou la deuxième pression à partir de la deuxième impédance, et évaluer ainsi la pression du fluide à débit nul ;
- estimer la température du fluide en utilisant la pression du fluide à débit nul ;
- estimer une première valeur de débit à partir de temps de vol des signaux ultrasonores entre le premier transducteur et le deuxième transducteur et de la température du fluide.

Dans un mode de réalisation, le procédé de mesure tel que précédemment décrit comprend en outre les étapes de :

- produire une deuxième valeur de débit à partir de la position courante de l'organe mobile et de la valeur de pression ;
- produire une valeur de débit consolidée à partir de la première valeur de débit et de la deuxième valeur de débit.

Dans un mode de réalisation, le procédé de mesure tel que précédemment décrit comprend en outre les étapes de :

- définir un intervalle de temps entre un temps t1 et un temps t2, tels que, au temps t1, une différence entre la deuxième pression et la première pression passe d'une valeur nulle à une valeur supérieure à un seuil prédéfini, et au temps t2, la différence entre la deuxième pression et la première pression passe d'une deuxième valeur supérieure au seuil prédéfini à la valeur nulle
- intégrer le débit courant sur l'intervalle de temps et évaluer ainsi un volume de fluide distribué via le conduit.

On propose de plus un programme d'ordinateur comprenant des instructions qui conduisent le circuit de traitement du compteur tel que précédemment décrit à exécuter les étapes du procédé de mesure tel que précédemment décrit.

On propose de plus un support d'enregistrement lisible par ordinateur, sur lequel est enregistré le programme d'ordinateur tel que précédemment décrit.

On propose de plus un procédé de régulation d'un débit courant, mis en oeuvre dans le circuit de traitement d'un compteur de fluide à ultrasons tel que précédemment décrit, et comprenant les étapes de :

- acquérir une consigne de débit ;
- estimer le débit courant en utilisant le procédé de mesure tel que précédemment décrit ;
- adapter la position courante de l'organe mobile en fonction d'un écart entre la consigne de débit et le débit courant.

On propose de plus un programme d'ordinateur comprenant des instructions qui conduisent le circuit de traitement du compteur tel que précédemment décrit à exécuter les étapes du procédé de régulation tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en oeuvre particuliers non limitatifs de l'invention.

BREVE DESCRIPTION DES DESSINS

Il sera fait référence aux dessins annexés parmi lesquels :

[Fig. 1] la figure 1 représente un compteur de fluide à ultrasons selon un premier mode de réalisation de l'invention ;
[Fig. 2] la figure 2 représente schématiquement deux transducteurs dans le conduit ;
[Fig. 3] la figure 3 représente un tableau d'une deuxième table de référence ;
[Fig. 4] la figure 4 représente un graphique comprenant une courbe de la valeur de pression ∆P en fonction du débit courant ;
[Fig. 5] la figure 5 représente des étapes d'un procédé de mesure ;
[Fig. 6] la figure 6 représente des étapes d'un procédé de mesure à partir de la valeur de pression ∆P ;
[Fig. 7] la figure 7 représente un tableau d'une troisième table de référence ;
[Fig. 8] la figure 8 représente un graphique comprenant une courbe de la vitesse du son dans l'eau en fonction de la pression à 20°C ;
[Fig. 9] la figure 9 représente des étapes d'un procédé de régulation ;
[Fig. 10] la figure 10 représente un graphique sur lequel on voit l'évolution de la pression mesurée dans le conduit lorsque l'installation commence puis cesse de consommer de l'eau ;
[Fig. 11] la figure 11 représente un graphique comprenant des courbes représentant la magnitude de l'impédance électrique d'un transducteur piézoélectrique en fonction de la fréquence à différentes valeurs de pression à 20°C ;
[Fig. 12] la figure 12 représente un graphique comprenant une courbe de mesure de la magnitude de l'impédance électrique à 2 MHz d'un transducteur électrique en fonction de la pression et une courbe du modèle analytique correspondant ;
[Fig. 13] la figure 13 représente un tableau d'une cinquième table de référence ;
[Fig. 14] la figure 14 représente un graphique comprenant des courbes de la vitesse du son dans l'eau en fonction de la pression à différentes valeurs de température ;
[Fig. 15] la figure 15 représente un graphique comprenant des courbes de la vitesse du son dans l'eau en fonction de la température à différentes valeurs de pression ;
[Fig. 16] la figure 16 représente un compteur de fluide à ultrasons selon un deuxième mode de réalisation de l'invention ;

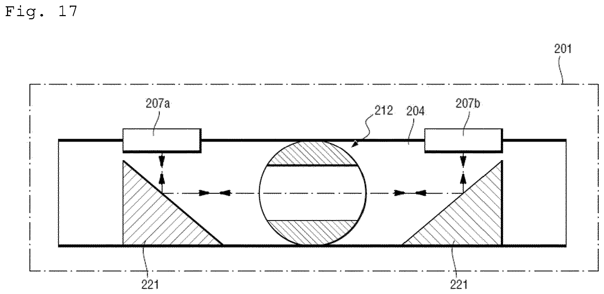

[Fig. 17] la figure 17 représente un compteur de fluide à ultrasons selon un troisième mode de réalisation de l'invention.

DESCRIPTION DETAILLEE DE L'INVENTION

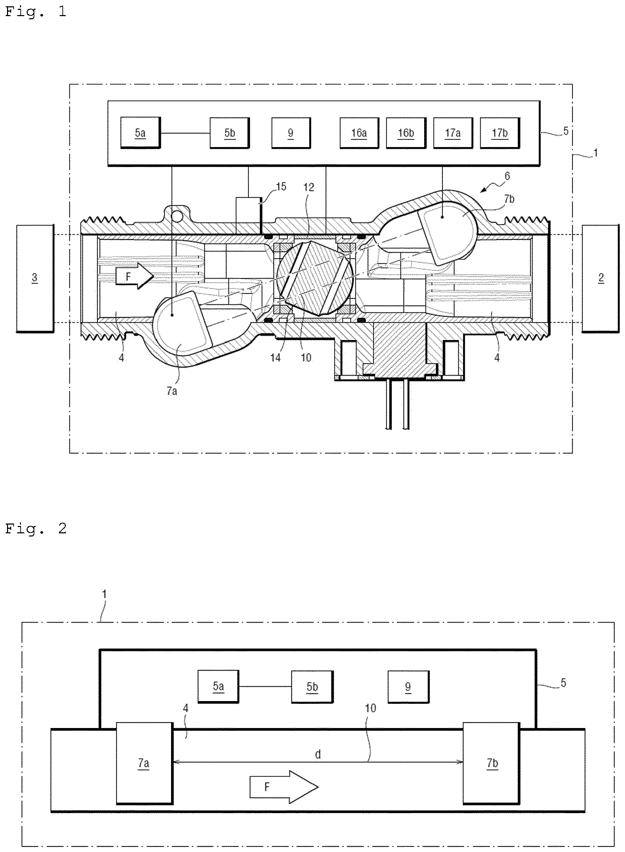

En référence aux figures 1 et 2, l'invention est mise en oeuvre dans un compteur de fluide à ultrasons 1. Le compteur 1 est en l'occurrence ici un compteur d'eau, qui est utilisé pour mesurer la consommation d'eau de l'installation d'un abonné 2. L'eau est fournie à l'installation de l'abonné 2 par un réseau de distribution d'eau 3.

Le compteur 1 comporte un conduit 4 dans lequel circule l'eau fournie par le réseau 3 à l'installation 2. L'eau circule dans le conduit 4 d'amont en aval, comme cela est indiqué par le sens de la flèche F. Ici, par « en amont », on entend du côté du réseau 3, et par « en aval », on entend du côté de l'installation 2.

Le compteur 1 comporte un circuit de traitement 5. Le circuit de traitement 5 comprend au moins un composant de traitement 5a, qui est par exemple un processeur « généraliste », un processeur spécialisé dans le traitement du signal (ou DSP, pour *Digital Signal Processor)*, un microcontrôleur, ou bien un circuit logique programmable tel qu'un FPGA (pour *Field Programmable Gate Arrays*) ou un ASIC (pour *Application Spécifie Integrated Circuit)*. Le circuit de traitement 5 comprend aussi une ou des mémoires 5b, reliées à ou intégrées dans le composant de traitement. Au moins l'une de ces mémoires forme un support d'enregistrement lisible par ordinateur, sur lequel est enregistré au moins un programme d'ordinateur comprenant des instructions qui conduisent le composant de traitement à exécuter au moins certaines des étapes du procédé de mesure et du procédé de régulation qui seront décrits plus bas.

Le compteur 1 comprend aussi un dispositif de mesure ultrasonique 6. Le dispositif de mesure ultrasonique 6 est utilisé « par défaut » pour mesurer le débit d'eau fourni à l'installation 2 par le réseau 3.

Le dispositif de mesure ultrasonique 6 comporte un transducteur amont 7a et un transducteur aval 7b. Le dispositif de mesure ultrasonique 6 comporte aussi un module de traitement 9 relié au transducteur amont 7a et au transducteur aval 7b. Le module de traitement 9 est ici implémenté dans le circuit de traitement 5.

Le transducteur amont 7a et le transducteur aval 7b sont avantageusement (mais pas nécessairement) appairés. Le transducteur amont 7a et le transducteur aval 7b sont ici des transducteurs piézoélectriques.

Chaque transducteur 7a, 7b joue successivement le rôle d'un émetteur et d'un récepteur de signaux ultrasonores.

Le module de traitement 9 génère un signal électrique d'excitation, et fournit à l'émetteur le signal électrique d'excitation. L'émetteur génère alors un signal ultrasonore. Le récepteur reçoit le signal ultrasonore après que celui-ci a parcouru dans le fluide un chemin prédéfini 10, et le module de traitement 9 mesure le temps de vol.

Le chemin prédéfini 10 est ici un chemin direct (incliné par rapport à un axe longitudinal du conduit 4, comme c'est le cas sur la figure 1, ou parallèle audit axe, comme c'est le cas sur la figure 2) . Le chemin prédéfini 10 a une longueur d, qui est connue très précisément.

Ainsi, le transducteur amont 7a émet tout d'abord le signal ultrasonore, qui est reçu par le transducteur aval 7b. Le module de traitement 9 mesure le temps de vol d'amont en aval $TOF_{UP}$.

Puis, le transducteur aval 7b émet le signal ultrasonore, qui est reçu par le transducteur amont 7a. Le module de traitement 9 mesure le temps de vol d'aval en amont $TOF_{DN}$.

Or, on a :

$$TOF_{UP} = \frac{d}{c - v_{fluid}}$$

$$TOF_{DN} = \frac{d}{c + v_{fluid}}$$

où $c$ est la vitesse du son dans l'eau, $d$ est la longueur du chemin prédéfini 10, et $v_{fluid}$ est la vitesse de l'écoulement de l'eau.

On définit $\Delta_{TOF}$ et $\Sigma_{TOF}$ :

$$\Delta_{TOF} = TOF_{DN} - TOF_{UP}$$

$$\Sigma_{TOF} = TOF_{DN} + TOF_{UP}$$

Le module de traitement 9 calcule la vitesse du son via la moyenne des deux temps de vol (aller et retour), qui est indépendante de l'écoulement du fluide :

$$c = \frac{2d}{\Sigma_{TOF}}$$

Le module de traitement 9 calcule la vitesse de l'écoulement de l'eau comme suit :

$$v_{fluid} = \frac{1}{2} \cdot \left( \frac{d}{TOF_{UP}} - \frac{d}{TOF_{DN}} \right)$$

$$v_{fluid} = \frac{d}{2} \cdot \frac{TOF_{DN} - TOF_{UP}}{TOF_{UP} \cdot TOF_{DN}}$$

$$v_{fluid} \approx 2d \cdot \frac{\Delta_{TOF}}{\Sigma_{TOF}^2}$$

La température est calculée à partir de la vitesse du son, par exemple via une approximation polynomiale, sans prendre en compte la pression si celle-ci n'est pas mesurée :

$$T = \sum_{i=0}^{N} a_i \times c^i$$

A partir de ces données, le débit Q de l'eau est calculé comme suit :

$$Q = K_T.v = K_T \cdot \frac{\Delta_{TOF}}{(\Sigma_{TOF})^2} = K_T.\frac{\Delta_{TOF}}{2d}.c^2$$

Le facteur $K_T$ est homogène à une surface et est, entre autres, corrélé à la section du conduit 4. Le facteur $K_T$ est issu d'une première table de référence, en fonction de la température de l'eau. La première table de référence est enregistrée dans une mémoire du circuit de traitement 5. Pour un $\Delta_{TOF}$ mesuré, la température est calculée via la vitesse du son. Ensuite, le $K_T$ est obtenu via la première table de référence en fonction de la température calculée précédemment.

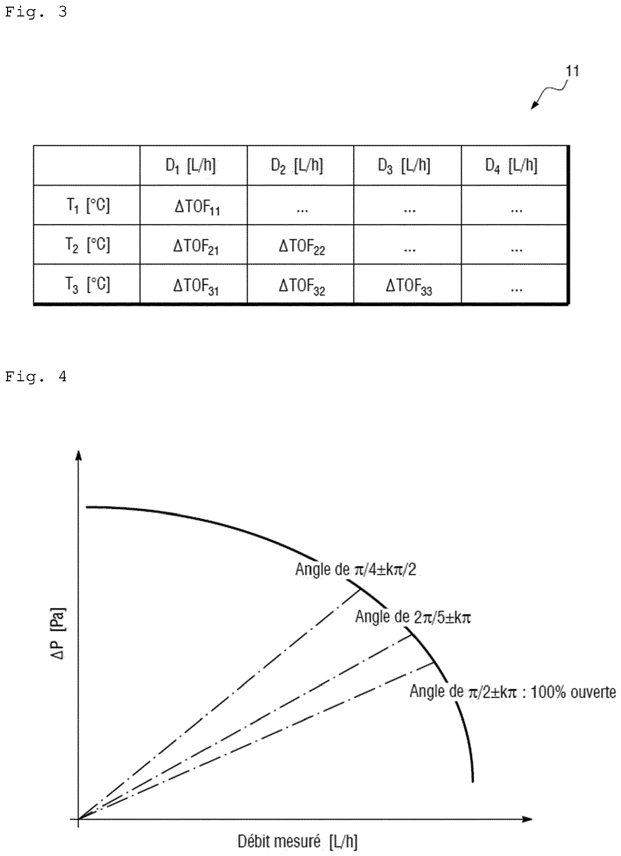

Il est possible, en référence à la figure 3, pour limiter les calculs complexes (et donc le temps de calcul et la consommation d'énergie), d'utiliser une deuxième table de référence 11 pour estimer le débit de l'eau. Cette deuxième table de référence 11 est par exemple en deux dimensions : température vs débit. La deuxième table de référence 11 est enregistrée dans une mémoire 5b du circuit de traitement 5.

La deuxième table de référence 11 comprend ici un unique tableau.

Par exemple, si la température est égale à $T_1$, et que le $\Delta_{TOF}$ est égal à $\Delta TOF_{11}$, le module de traitement 9 en déduit que le débit est égal à $D_1$.

Le compteur 1 comprend aussi une vanne 12 qui permet de réguler, limiter ou couper le débit d'eau. La vanne 12 est visible sur la figure 1 mais n'est pas représentée sur la figure 2.

La vanne 12 est positionnée, selon une longueur du conduit 4, entre les deux transducteurs 7a, 7b.

La vanne 12 est une vanne multi-position motorisée (électromécanique). La vanne 12 comprend un organe mobile qui s'étend dans le conduit 4 et dont une position courante peut être commandée pour contrôler le débit courant du fluide. Ici, la vanne 12 est une vanne à bille et l'organe mobile est donc une bille 14 ; la position courante de la bille 14 est une position angulaire.

Le compteur 1 comprend aussi un capteur de position 15 agencé pour mesurer la position courante de la bille 14.

Le compteur 1 comprend de plus des moyens de communication qui sont susceptibles de mettre en oeuvre tout type de communication, et par exemple une communication via un réseau cellulaire de type 2G, 3G, 4G, Cat-M ou NB-IOT, une communication selon le protocole LoRa, une communication radio selon le standard *Wize* opérant à la fréquence de 169MHz, etc.

Les moyens de communication permettent notamment au circuit de traitement 5 de recevoir, de l'extérieur, une consigne de débit. La consigne de débit est par exemple transmise par un SI (pour Système d'Information) du distributeur d'eau ou du gestionnaire du réseau, éventuellement via un concentrateur de données.

Le circuit de traitement 5 acquiert la consigne de débit, la position courante de la bille 14 (mesurée par le capteur de position 15), et peut ainsi réguler le débit courant en modifiant si nécessaire la position angulaire de la bille 14. On note que le circuit de traitement 5 est aussi capable de piloter la vanne 12 de manière autonome (c'est à dire sans recevoir de consigne de l'extérieur) . On note aussi que la vanne 12 pourrait être pilotée via une consigne différente, par exemple via une consigne de position angulaire de la bille 14.

Comme on l'a vu précédemment, le dispositif de mesure ultrasonique 6 est utilisé par défaut pour mesurer le débit courant.

Cependant, il est possible, lorsque la vanne 12 n'est pas suffisamment ouverte (c'est-à-dire pour certaines positions angulaires de la bille 14), que la bille 14 empêche les signaux ultrasonores de cheminer entre les transducteurs 7a, 7b : la vanne 12 obstrue le champ ultrasonore et le débit d'eau ne peut alors pas être mesuré par le dispositif de mesure ultrasonique 6. Sachant que l"intégration de capteurs supplémentaires (par exemple, un capteur de pression) dans le compteur 1 est, dans certains cas, limitée (notamment en raison de contraintes de dimensions spatiales, d'étanchéité, de perte de charge, de vieillissement, d'encrassement, de coût, etc.), il est prévu que le circuit de traitement 5 utilise directement le transducteur amont 7a et le transducteur aval 7b pour évaluer respectivement une première pression P1 et une deuxième pression P2 à partir desquelles il est possible d'estimer le débit courant de l'eau dans le conduit 4. La première pression P1 est égale à la pression instantanée du fluide dans le conduit 4 en amont de la vanne 12 et la deuxième pression P2 est égale à la pression instantanée du fluide dans le conduit 4 en aval de la vanne 12. La première pression P1 est évaluée à partir d'une première impédance électrique Z1 du transducteur amont 7a et la deuxième pression P2 est évaluée à partir d'une deuxième impédance électrique Z2 du transducteur aval 7b.

Le principe permettant d'évaluer une pression d'un milieu dans lequel un transducteur piézoélectrique est placé via une impédance électrique dudit transducteur piézoélectrique est décrit précisément à la fin de la description.

En effet, la vanne 12 agit comme un organe déprimogène, amplifiant la perte de charge entre son entrée et sa sortie.

Ainsi, le débit courant Q (en litres/heure) s'exprime à partir d'une valeur de pression $\Delta P$ représentative d'une différence entre la deuxième pression P2 et la première pression P1.

Ici, la valeur de pression $\Delta P$ est égale à la différence entre la deuxième pression P2 et la première pression P1 :

$$\Delta P = P2 - P1.$$

On a :

$$Q = K \times \sqrt{\Delta P}$$

K est un facteur lié à la vitesse de l'écoulement du fluide, la température, la géométrie du conduit, etc.

Lorsque la vanne 12 est ouverte ou partiellement ouverte et que le débit courant est nul, la pression est identique de part et d'autre de la vanne 12, P1 = P2, donc la valeur de pression ΔP est nulle. Le première pression P1 évaluée via le transducteur amont 7a et la deuxième pression P2 évaluée via le transducteur aval 7b sont alors toutes deux égales à la pression du fluide à débit nul ou pression statique du réseau.

Pour une pression statique du réseau donnée avec vanne fermée, l'ouverture de la vanne va faire varier (chuter) la pression : il y aura une différence entre la pression à débit nul et la pression avec débit.

Le changement de section (conduit, vanne, etc.) génère des variations de vitesse et donc de pression. La valeur de pression ΔP = P2-P1 est donc à l'image du débit courant. La figure 4 représente graphiquement l'évolution de la valeur de pression ΔP en fonction du débit courant en mettant en évidence des valeurs particulières de la position courante (position angulaire) de la bille 14 : $\frac{\pi}{2} + k\pi$, $\frac{2\pi}{5} + k\pi$, $\frac{\pi}{4} + k\frac{\pi}{2}$, avec k un entier relatif.

Lorsque la vanne 12 est fermée (l'état de la vanne doit être connu), le débit courant est nul mais la valeur de pression ΔP peut être non nulle. La première pression P1 évaluée via le transducteur amont 7a est alors égale à la pression du fluide à débit nul (pression statique du réseau) et la deuxième pression P2 évaluée via le transducteur aval 7b est alors égale à la pression entre la vanne 12 et l'installation 2.

Lorsque la position courante de la bille 14 est telle que le débit courant ne peut pas être mesuré par le dispositif de mesure ultrasonique 6, c'est-à-dire lorsque la vanne 12 est dans une position semi-ouverte et que la mesure des ultrasons est impossible, le circuit de traitement 5 évalue le débit courant en fonction de la position angulaire courante de la bille 14 et de la valeur de pression ΔP.

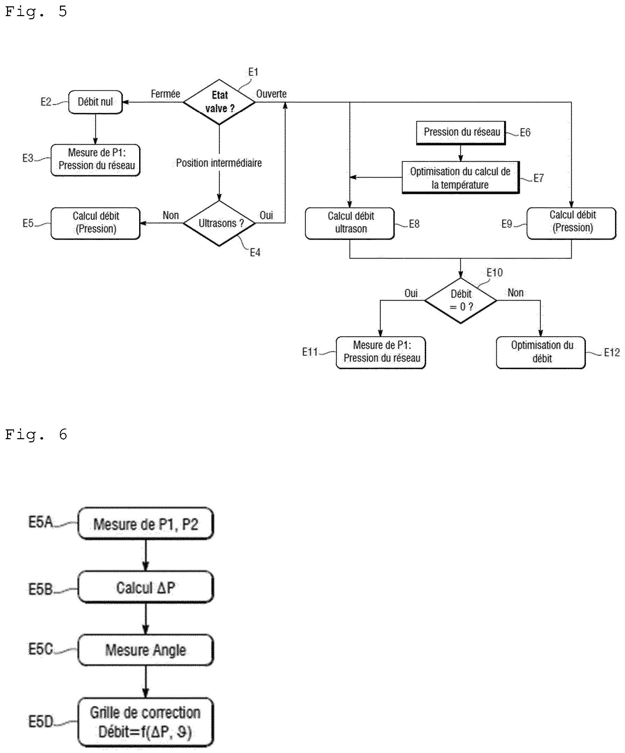

En référence à la figure 5, on décrit plus précisément le procédé de mesure mis en oeuvre dans ce cas par le circuit de traitement 5.

Le circuit de traitement 5 acquiert tout d'abord la position angulaire courante de la bille 14 via le capteur de position 15 (étape E1).

Si la vanne 12 est fermée, le circuit de traitement 5 acquiert au moins une valeur de la première pression P1 produite via le transducteur amont 7a (étape E2), et évalue ainsi la pression de l'eau à débit nul (étape E3), c'est-à-dire la pression du réseau.

Si la vanne 12 est partiellement ouverte, le circuit de traitement 5 vérifie si les signaux ultrasonores peuvent cheminer librement entre les transducteurs 7a, 7b, et donc si la position courante de la bille 14 est telle que le débit courant peut être mesuré ou non par le dispositif de mesure ultrasonique 6 (étape E4). Si ce n'est pas le cas, le circuit de traitement 5 évalue le débit courant en fonction de la position angulaire courante de la bille 14 et de la valeur de pression ΔP = P2-P1 (étape E5).

On décrit plus précisément l'étape E5, en référence à la figure 6, le circuit de traitement 5 acquiert donc au moins une valeur de la première pression P1 produite via le transducteur amont 7a et au moins une valeur de la deuxième pression P2 produite via le transducteur aval 7b (étape 5A).

Par la suite, le circuit de traitement 5 calcul la valeur de pression ΔP = P2-P1 (étape 5B).

De préférence, le circuit de traitement 5 acquiert à nouveau la position angulaire courante de la bille 14 via le capteur de position 15 (étape 5C).

Le circuit de traitement 5 utilise alors, pour estimer le débit courant, une troisième table de référence 18 qui est enregistrée dans une mémoire 5b du circuit de traitement 5 (étape 5D).

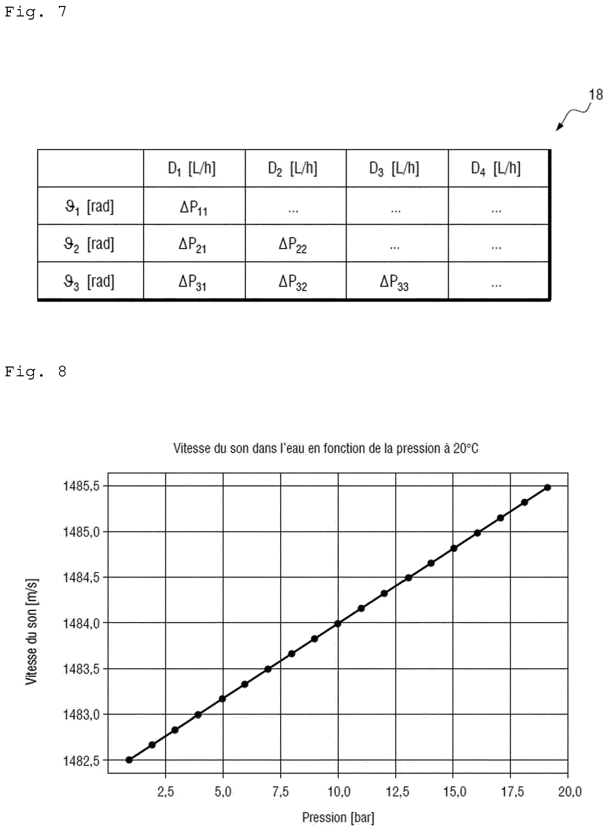

En référence à la figure 7, la troisième table de référence 18 est par exemple en deux dimensions 2D : valeur de pression ΔP en fonction de la position angulaire courante de la bille 14 et du débit.

Par exemple, si la position angulaire courante de la bille 14 est $\theta = \theta_3$, et que $\Delta P = P2-P1 = \Delta P_{31}$, le circuit de traitement 5 estime que le débit courant est égal à $D_1$. Inversement, le circuit de traitement 5 peut, en fonction d'une valeur de pression ΔP et d'un débit souhaité, estimer la position angulaire nécessaire de la bille 14.

On revient maintenant à la figure 5 et, plus particulièrement, à l'étape E4 du procédé de mesure.

Si la vanne 12 est partiellement ouverte et que les signaux ultrasonores peuvent cheminer librement entre les transducteurs 7a, 7b ou si la vanne 12 est (complètement) ouverte alors la position angulaire courante de la bille 14 est telle que le débit courant peut être mesuré par le dispositif de mesure ultrasonique 6.

Le circuit de traitement utilise donc le dispositif de mesure ultrasonique 6 pour mesurer le débit (étape E8).

Avantageusement, lorsque le circuit de traitement 5 utilise le dispositif de mesure ultrasonique 6 pour mesurer le débit courant, le circuit de traitement 5 peut consolider la mesure du débit courant, produite par le dispositif de mesure ultrasonique 6, en utilisant la pression de l'eau.

Comme on l'a vu plus tôt, le dispositif de mesure ultrasonique 6 utilise les signaux ultrasonores pour calculer la vitesse du son dans l'eau et la vitesse de l'écoulement de l'eau dans le conduit 4. En effet, la différence entre les temps aller et retour des signaux ultrasonores est l'image de la vitesse de l'écoulement. La somme des temps aller et retour est l'image de la température de l'eau.

Pour obtenir une mesure très précise du débit, il est donc préférable de connaître la température, la vitesse du son dans l'eau, et la pression de l'eau dans le conduit 4.

Généralement, la pression est considérée comme négligeable.

Or, la vitesse du son dans l'eau (comme dans tout fluide) est fonction, entre autres, de la température et de la pression.

Ainsi, à température constante T, la vitesse c(T,P) du son dans l'eau varie en fonction de la pression P comme indiqué dans l'équation de *Belogol'skii et al.* :

$$C(T,P)=c(T,0) + M_1(T)\,(P-0.101325) + M_2(T)\,(P-0.101325)^2 + M_3(T)\,(P-0.101325)^3$$

$$c(T,0) = a_{00} + a_{10}T + a_{20}T^2 + a_{30}T^3 + a_{40}T^4 + a_{50}T^5$$

$$M_1(T) = a_{01} + a_{11}T + a_{21}T^2 + a_{31}T^3$$

$$M_2(T) = a_{02} + a_{12}T + a_{22}T^2 + a_{32}T^3$$

$$M_3(T) = a_{03} + a_{13}T + a_{23}T^2 + a_{33}T^3$$

Les coefficients $a_{00}$, $a_{10}$, $a_{20}$, etc. sont fournis en annexe de la présente description.

On voit sur la figure 8 que la vitesse du son dans l'eau varie en fonction de la pression.

Ainsi, à 20°C, entre un milieu à 1 bar et un milieu à 16 bars (pression maximale d'un réseau d'eau résidentielle), la vitesse du son variera de 1482,5m/s à 1484.99 mis (écart de 2.48m/s). Cet écart correspond à une différence de température 0.82°C.

Cet écart peut introduire une erreur dans le calcul du débit via la deuxième table de référence 11 (figure 3).

Il est donc avantageux de prendre en compte la pression lors de la calibration et lors de la mesure pour améliorer la caractérisation du milieu et le calcul du débit.

On peut alors remplacer la deuxième table de référence 11 par une table en trois dimensions, qui comprend, pour différentes valeurs prédéfinies de pression, un tableau semblable au tableau de la figure 3.

Dans le cas où la pression du fluide à débit nul (pression statique du réseau) n'a pas été mesurée précédemment à l'étape E3, le circuit de traitement 5 peut attendre que le débit courant soit nul.

Lorsque le débit courant est nul, le circuit de traitement acquiert au moins une valeur de la première pression P1 produite via le transducteur amont 7a ou au moins une valeur de la deuxième pression P2 produite via le transducteur 7b, et évalue ainsi la pression du fluide à débit nul (étape E6).

Le circuit de traitement 5 utilise alors la vitesse du son dans l'eau et la pression du fluide à débit nul pour estimer avec précision la température du fluide (étape E7).

Le circuit de traitement 5 utilise alors la deuxième table de référence 11 pour estimer la première valeur de débit (étape E8).

On vient de voir que, si l'état de la vanne 12 est tel que le dispositif de mesure ultrasonique peut être utilisé, le circuit de traitement 5 utilise le débit pour mesurer le débit courant.

Avantageusement, si le dispositif de mesure ultrasonique 6 peut être utilisé, le circuit de traitement 5 utilise le dispositif de mesure ultrasonique 6 pour mesurer une première valeur de débit (étape E8) et utilise aussi le transducteur aval 7a et le transducteur amont 7b pour évaluer respectivement la première pression P1 et la deuxième pression P2 et ainsi mesurer une deuxième valeur de débit (étape E9) .

Le circuit de traitement 5 utilise également le transducteur amont 7a et le transducteur aval 7b pour mesurer la deuxième valeur de débit (étape E9). Pour cela, le circuit de traitement 5 réalise successivement les étapes E5A, E5B, E5C et E5D.

Le circuit de traitement 5 vérifie si la première valeur de débit et/ou la deuxième valeur de débit sont nulles (étape E10) .

Si c'est le cas (débit courant nul), le circuit de traitement 5 acquiert alors au moins une valeur de la première pression P1 produite via le transducteur amont 7a ou au moins une valeur de la deuxième pression P2 produite via le transducteur aval 7b, et évalue ainsi la pression de l'eau à débit nul (étape 11), c'est-à-dire la pression du réseau.

Si ce n'est pas le cas (débit courant non nul), le circuit de traitement 5 produit une valeur débit consolidée à partir de la première valeur de débit (mesurée via le dispositif de mesure ultrasonique 6) et de la deuxième valeur de débit (mesurée à partir de la valeur de pression ΔP déterminée à partir des transducteurs 7a, 7b) (étape E12). De préférence, la valeur de débit consolidée est une valeur moyenne arithmétique de la première valeur de débit et de la deuxième valeur de débit. La valeur de débit consolidée pourrait être un autre type de valeur numérique, par exemple, la valeur de débit consolidée peut être une valeur moyenne pondérée de la première valeur de débit et de la deuxième valeur de débit.

Le circuit de traitement 5 peut aussi, si nécessaire, réguler le débit courant.

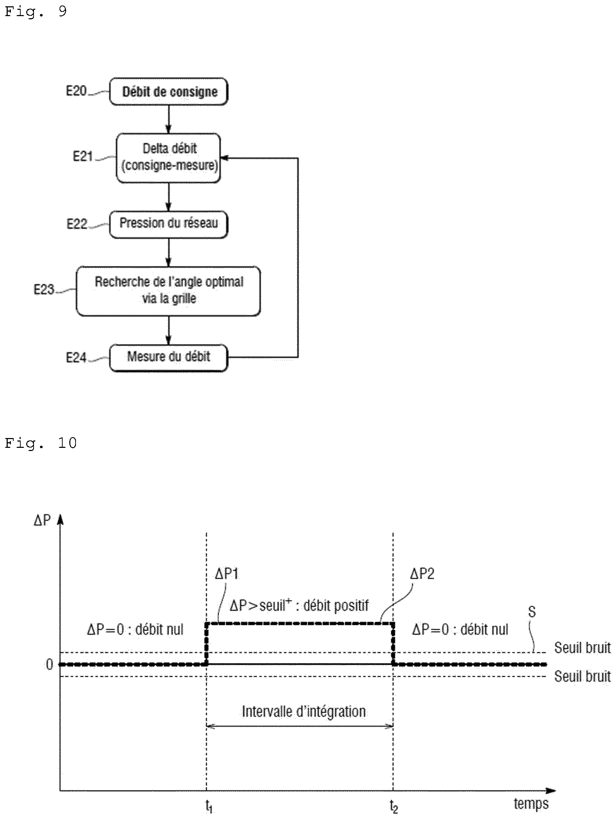

Pour cela, en référence à la figure 9, le circuit de traitement 5 acquiert une consigne de débit (étape E20).

Le circuit de traitement 5 mesure alors le débit courant en utilisant le procédé de mesure qui vient d'être décrit, puis calcule l'écart entre la consigne de débit et le débit courant (étape E21).

Le circuit de traitement 5 adapte alors la position courante de la bille 14 en fonction de cet écart.

Pour cela, le circuit de traitement 5 acquiert la pression du fluide à débit nul (pression statique du réseau préalablement mesurée via le procédé de mesure) - étape E22, puis détermine, dans la troisième table de référence 18, la position angulaire optimale de la bille 14 qui permet de conférer au débit courant la valeur de la consigne de débit (étape E23).

Le circuit de traitement 5 pilote alors la vanne 12 pour amener la bille 14 dans la position angulaire optimale.

Le circuit de traitement 5 mesure alors à nouveau le débit courant (étape E24), et le procédé de régulation repasse à l'étape E21. L'asservissement continue jusqu'à aboutir à un écart négligeable entre le débit courant et la consigne de débit.

Avantageusement, le circuit de traitement 5 peut utiliser la première pression P1 évaluée via le transducteur amont 7a et la deuxième pression P2 évaluée via le transducteur aval 7b pour estimer le volume d'eau distribué via le conduit 4.

En effet, en présence de débit, la valeur de pression ΔP va varier.

Pour cela, en référence à la figure 10, le circuit de traitement 5 détecte un intervalle de temps qui s'étend entre un temps t1 et un temps t2 tels que :

o au temps t1, la valeur de pression ΔP passe d'une valeur nulle à une première valeur $\Delta P_1$ supérieure à un seuil prédéfini S. Le seuil prédéfini S est ici un seuil de bruit dû au bruit de mesure et aux incertitudes lors de l'évaluation de la première pression P1 via le transducteur amont 7a de la deuxième pression P2 via le transducteur aval 7b.
o au temps t2, la valeur de pression ΔP passe d'une deuxième valeur $\Delta P_2$ supérieure au seuil S (ici, on note que la deuxième valeur $\Delta P_2$ est égale à la première valeur $\Delta P_1$) à une valeur nulle.

La précision de cet intervalle de temps [t1, t2] dépend de la fréquence à laquelle la première pression P1 et la deuxième pression P2 sont respectivement évaluées via le transducteur amont 7a et le transducteur aval 7b.

Le circuit de traitement 5 intègre alors le débit courant sur l'intervalle de temps [t1 ; t2] pour calculer le volume consommé :

$$\text{Volume} = \int_{t1}^{t2} Q.dt,$$

où Q est le débit courant (en litres/heure).

Il est maintenant décrit comment la première pression P1 et la deuxième pression P2 sont respectivement évaluées à partir de la première impédance électrique Z1 du transducteur amont 7a et de la deuxième impédance électrique Z2 du transducteur aval 7b.

Un transducteur piézoélectrique classique se présente généralement sous la forme d'un disque comprenant des faces. L'impédance électrique aux bornes d'un transducteur piézoélectrique est ainsi fonction des propriétés physiques du disque mais également de l'impédance mécanique d'un ou de milieux avec lequel ou lesquels les faces du disque sont en contact. L'impédance mécanique $Z_m$ (N.s/m) d'un milieu s'exprime selon l'expression suivante :

$$Z_m = S \cdot \rho \cdot c$$

S est la section du conduit (m$^2$), $\rho$ est la densité du milieu (kg/m$^3$) et c est la vitesse du son dans le milieu (m/s) .

L'impédance mécanique $Z_m$ d'un milieu est en autres fonction de la pression du milieu. Par exemple, si le fluide est un gaz parfait, on a :

$$P \cdot V = n \cdot R \cdot T$$

P est la pression (Pa), V est le volume (m3), n est la quantité de matière (mol), R est la constante des gaz parfaits ($\approx$ 8,314 J/K/mol) et T est la température absolue (K) .

On sait également que :

$$n = \frac{\rho \cdot V}{M}$$

M est la masse molaire (kg/mol) et $\rho$ est la densité (kg/m$^3$).

Ainsi, on a :

$$P = \frac{\rho \cdot R \cdot T}{M}$$

Sachant que l'impédance électrique d'un transducteur piézoélectrique dépend de l'impédance mécanique d'un milieu dans lequel il est placé et que l'impédance mécanique du milieu dépend elle-même de la pression dudit milieu, il est possible d'affirmer que la réponse fréquentielle d'un transducteur piézoélectrique est une fonction de la pression du milieu.

La variation de la réponse fréquentielle d'un transducteur piézoélectrique peut être directement observée en mesurant l'impédance électrique du transducteur piézoélectrique (magnitude en fonction de la fréquence) ou bien encore en mesurant la réponse impulsionnelle du transducteur piézoélectrique (fonction de transfert, gain, bande passante).

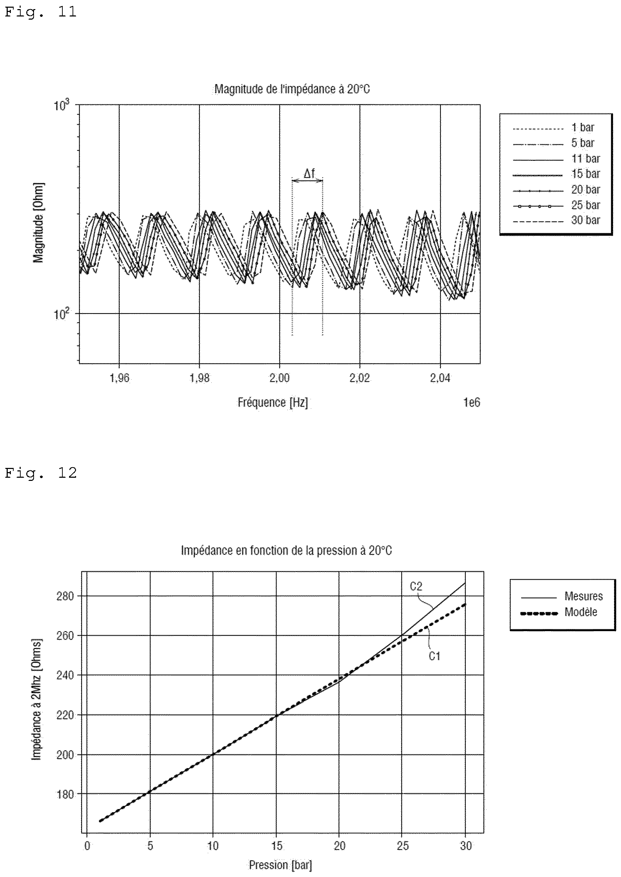

En référence à la figure 11, on voit que des variations de la pression du milieu (ici, de 1 bar à 30 bars) à température constante (ici, 20°c) produisent un décalage fréquentiel $\Delta f$ de l'impédance électrique mesurée aux bornes du transducteur piézoélectrique. Plus précisément, on voit que l'augmentation de la pression du milieu produit le décalage fréquentiel $\Delta f$ vers la droite. Le décalage fréquentiel $\Delta f$ est directement proportionnel à la pression du milieu. La magnitude de l'impédance électrique est ici mesurée au voisinage d'une fréquence d'excitation du transducteur piézoélectrique qui est égale à 2 MHz, et plus précisément entre 1.96 MHz et 2.04 MHz.

En référence à la figure 12, on voit que l'impédance électrique d'un transducteur piézoélectrique à la fréquence d'excitation (ici, 2 MHz) et à 20°C est une fonction de la pression du milieu dans lequel le transducteur piézoélectrique est immergé. Dans une configuration spécifique, l'impédance électrique à la fréquence d'excitation peut être une fonction linéaire de la pression du milieu (mais cela n'est pas toujours le cas). En éliminant les échos ultrasonores responsables de l'oscillation de la magnitude de l'impédance électrique, il est possible de construire un modèle analytique du transducteur piézoélectrique (courbe C1), ici basé sur seulement deux mesures de l'impédance électrique à la fréquence d'excitation, permettant de prédire la pression du milieu en fonction de l'impédance électrique mesurée aux bornes du transducteur piézoélectrique à la fréquence d'excitation.

On remarque que le modèle analytique (impédance électrique à 2 MHz - ohms - vs pression du milieu - bar -) ainsi construit (courbe C1) est ajusté sur les mesures réelles réalisées (courbe C2). Ici, le modèle analytique du transducteur piézoélectrique est calibré de telle sorte qu'il s'agit d'un modèle linéaire :

$$P = 0.2 \times Z_e + 44.33$$

P est la pression du milieu (bar) et $Z_e$ est l'impédance électrique à 2 MHz du transducteur piézoélectrique (ohms).

La pression du milieu peut donc être calculée analytiquement à partir du modèle analytique (modélisation mathématique) construit en prenant en compte tous les paramètres intrinsèques et extrinsèques (propriétés des matériaux, température, etc.) du transducteur piézoélectrique (disque) et du ou des milieux dans lequel ledit transducteur piézoélectrique est placé.

Le modèle analytique pourrait être construit lors d'une phase de calibration du compteur 1 puis enregistré dans la mémoire 5b du circuit de traitement 5.

En fonctionnement, si le dispositif de mesure ultrasonique 6 ne peut pas être utilisé, le circuit de traitement 5 détermine alors la première impédance Z1 du transducteur amont 7a et la deuxième impédance Z2 du transducteur aval 7b. La première impédance Z1 et la deuxième impédance Z2 sont ici respectivement déterminées à une première fréquence d'excitation du transducteur amont 7a et à une deuxième fréquence d'excitation du transducteur 7b. Ici, il est considéré que la première fréquence d'excitation et la deuxième fréquence d'excitation sont égales, on parlera donc simplement de la fréquence d'excitation du transducteur amont 7a et du transducteur aval 7b (égale ici à 2 MHz).

A cet effet, le compteur 1 comprend en outre un premier capteur de tension 16a, un deuxième capteur de tension 16b, un premier capteur de courant 17a et un deuxième capteur de courant 17b qui sont ici intégrés au circuit de traitement (5).

Le premier capteur de tension 16a est agencé pour mesurer une première tension électrique V1 aux bornes du transducteur amont 7a et le premier capteur de courant 17a est agencé pour mesurer un premier courant électrique I1 circulant à travers le transducteur amont 7a. V1 et I1 sont ici mesurés lorsque le transducteur amont 7a est excité par une source courant/tension fonctionnant à la fréquence d'excitation.

De même, le deuxième capteur de tension 16b et agencé pour mesurer une deuxième tension électrique V2 aux bornes du transducteur aval 7b et le deuxième capteur de courant 17b est agencé pour mesurer un deuxième courant électrique I2 circulant à travers le transducteur aval 7b. V2 et I2 sont ici mesurés lorsque le transducteur aval 7b est excité par une source courant/tension fonctionnant à la fréquence d'excitation.

Le circuit de traitement 5 calcul alors la première impédance électrique Z1 en fonction de la première tension électrique V1 et du premier courant électrique I1, Z1 = V1/I1 (loi d'Ohm), et la deuxième impédance électrique Z2 en fonction de la deuxième tension électrique V2 et du deuxième courant électrique I2, Z2 = V2/I2 (loi d'Ohm). On rappelle que Z1 et Z2 sont ici les impédances électriques respectives du transducteur amont 7a et du transducteur aval 7b à la fréquence d'excitation.

Le circuit de traitement 5 utilise alors le modèle analytique des transducteurs 7a, 7b pré-enregistré dans la mémoire 5b pour, à partir de la valeur calculée de la première impédance électrique Z1, déduire une valeur de la première pression P1. De même, le circuit de traitement 5 utilise le modèle analytique des transducteurs 7a, 7b pré-enregistré dans la mémoire 5b pour, à partir de la valeur calculée de la deuxième impédance électrique Z2, déduire une valeur de la deuxième pression P2.

Dans le procédé de mesure selon l'invention, la première impédance électrique Z1 est une impédance électrique du transducteur piézoélectrique amont 7a à la fréquence d'excitation du transducteur amont 7a et du transducteur aval 7b, et la deuxième impédance électrique Z2 est une impédance électrique du transducteur piézoélectrique aval 7b à ladite fréquence d'excitation.

En variante, le circuit de traitement peut, au lieu d'évaluer la première impédance Z1 et la deuxième impédance Z2 uniquement à la fréquence d'excitation, être agencé pour :

- exciter le transducteur amont (7a) à des fréquences comprises dans un premier intervalle de fréquences prédéterminé et ainsi évaluer une première fonction de la première impédance Z1 en fonction de la fréquence sur ledit premier intervalle ;
- puis évaluer, à partir de la première fonction, un premier décalage Δf1 (décalage fréquentiel) d'une première fréquence de résonance ou d'une première fréquence d'antirésonance par rapport à une première fréquence de référence. La première fréquence de référence est une fréquence de résonance ou d'antirésonance qui est mesurée lors de la phase de calibration du compteur 1 à plusieurs pressions de référence connues et avantageusement à plusieurs températures de référence connues également. Une fois mesurée, la première fréquence de référence est enregistrée dans la mémoire 5b du circuit de traitement 5.

De la même manière, le circuit de traitement 5 peut être agencé pour :

- exciter le transducteur aval (7b) à des fréquences comprises dans un deuxième intervalle de fréquences prédéterminé (qui peut être similaire ou non au premier intervalle de fréquences prédéterminé) et ainsi évaluer une deuxième fonction de la deuxième impédance en fonction de la fréquence sur ledit deuxième intervalle ;
- puis évaluer, à partir de la deuxième fonction, un deuxième décalage Δf2 (décalage fréquentiel) d'une deuxième fréquence de résonance ou d'une deuxième fréquence d'antirésonance par rapport à une deuxième fréquence de référence. La deuxième fréquence de référence est une fréquence de résonance ou d'antirésonance qui est ici mesurée lors de la phase de calibration du compteur 1 à plusieurs pressions de référence connues et avantageusement à plusieurs températures de référence connues également. Une fois mesurée, la deuxième fréquence de référence est enregistrée dans la mémoire 5b du circuit de traitement 5.

Sachant que le premier décalage Δf1 est proportionnel à la première pression P1 et que le deuxième décalage Δf2 est proportionnel à la deuxième pression P2, le circuit de traitement 5 peut évaluer la première pression P1 à partir du premier décalage Δf1 et évaluer la deuxième pression P2 à partir du deuxième décalage Δf2.

En référence à la figure 11 qui représente la magnitude de l'impédance d'un transducteur piézoélectrique en fonction de la fréquence, on voit que le comportement fréquentiel de la magnitude consiste en une alternance de maximas et de minimas. Les maximas correspondent à des fréquences de résonance et les minimas correspondent à des fréquences d'antirésonance. Le décalage fréquentiel Δf mis en évidence sur la figure 11 correspond ici au décalage d'une fréquence de résonance (maxima) lorsque la pression augmente de 1 bar à 30 bars. Il est bien sur possible d'évaluer le décalage fréquentiel Δf en s'intéressant à une fréquence d'antirésonance (minima) à la place d'une fréquence de résonance.

La plage de fréquence prédéterminée est ici une plage de fréquence au voisinage de la fréquence d'excitation mais cela n'est pas nécessairement le cas.

Selon cette variante, le procédé de mesure selon l'invention comprend les étapes de :

- évaluer à partir de la première impédance électrique Z1 un premier décalage Δf1, par rapport à une première fréquence de référence, d'une première fréquence de résonance ou d'une première fréquence d'antirésonance du transducteur amont 7a ;
- évaluer à partir de la deuxième impédance électrique un deuxième décalage Δf2, par rapport à une deuxième fréquence de référence, d'une deuxième fréquence de résonance ou d'une deuxième fréquence d'antirésonance du transducteur aval (7b) ;
- et évaluer à partir du premier décalage Δf1 la première pression P1 et évaluer à partir du deuxième décalage Δf2 la deuxième pression P2.

Le circuit de traitement 5 pourrait également utiliser une quatrième table de référence. La quatrième table de référence est par exemple en deux dimensions : pression vs température. La quatrième table de référence est enregistrée dans une mémoire 5b du circuit de traitement 5.

La quatrième table de référence comprend un premier tableau qui permet de relier la température et la première pression P1 via la première impédance électrique Z1 à la fréquence d'excitation et un deuxième tableau qui permet de relier la température et la deuxième pression P2 via la deuxième impédance électrique Z2 à la fréquence d'excitation.

Le circuit de traitement 5 utilise ainsi la quatrième table de référence pour évaluer la première pression P1 à partir de la première impédance électrique Z1 et la deuxième pression P2 à partir de la deuxième impédance électrique Z2.

Il est à noter que la quatrième table de référence pourrait, à la place de relier la température et la pression via l'impédance électrique à la fréquence d'excitation, relier la température et la pression via le décalage fréquentiel Δf (vu au niveau de la magnitude de l'impédance électrique d'un transducteur piézoélectrique lorsque la pression varie).

La quatrième table de référence pourrait être également plus complète en prenant en compte le débit d'eau en paramètre.

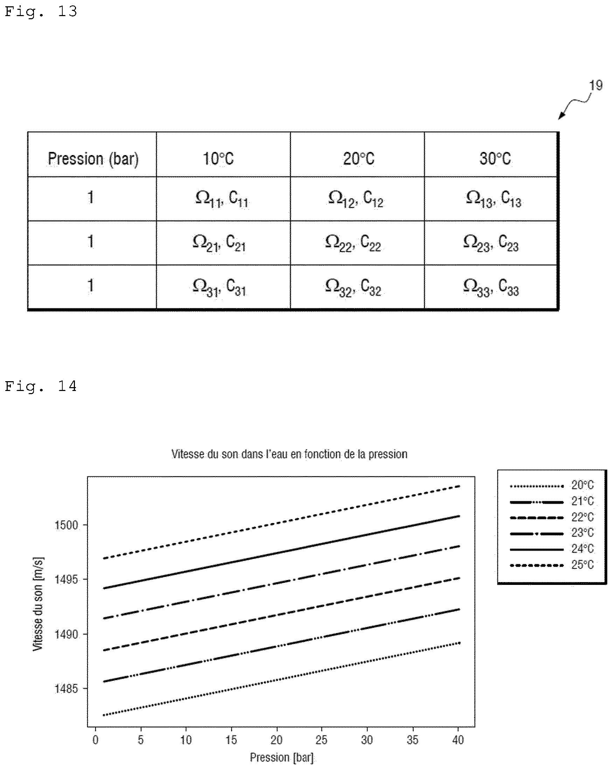

En référence à la figure 13, le circuit de traitement 5 pourrait utiliser (à la place ou en complément de la quatrième table de référence) une cinquième table de référence 19. La cinquième table de référence 19 comprend un premier tableau permettant de relier la température et la première pression P1 via un couple [première impédance électrique Z1 (à la fréquence d'excitation), vitesse du son dans l'eau c] et un deuxième tableau permettant de relier la température et la deuxième pression P2 via un couple [deuxième impédance électrique Z2 (à la fréquence d'excitation), vitesse du son dans l'eau c].

Par exemple, toujours en référence à la figure 13 qui représente uniquement le premier tableau, si la température est égale à 10°C, que la première impédance Z1 à la fréquence d'excitation est égale à $\Omega_{21}$ et que la vitesse du son dans l'eau est égale à $C_{21}$, alors la première pression P1 est égale à 8 bars.

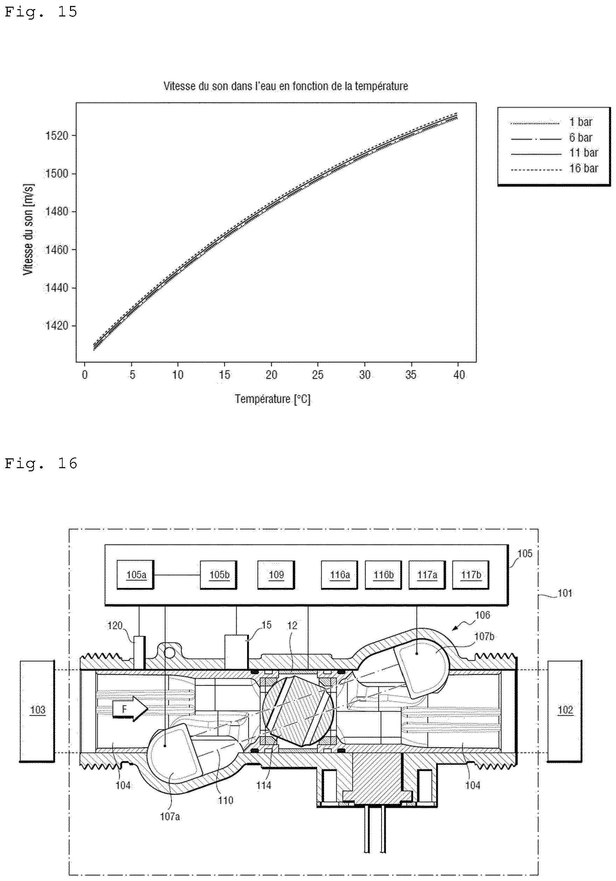

L'utilisation de la cinquième table de référence par le circuit de traitement 5 pourrait permettre d'évaluer la première pression P1 et la deuxième pression P2 ainsi que la température via un processus d'optimisation et d'augmenter la précision avec laquelle le débit courant est mesuré. En effet, en référence aux figures 14 et 15, on remarque bien que la vitesse du son dans l'eau c est une fonction à la fois de la pression et de la température.

On remarque que, pour évaluer la première pression P1 et la deuxième pression P2, les grandeurs mesurées sont la première impédance Z1 du transducteur amont 7a, la deuxième impédance Z2 du transducteur aval 7b et la vitesse du son dans l'eau c. Cette dernière est ici mesurée par exemple en utilisant le dispositif de mesure ultrasonique 6.

On note que l'invention peut bien sûr être mise en oeuvre dans un compteur de fluide autre qu'un compteur d'eau. Le fluide peut en particulier être un fluide compressible (gaz par exemple).

Dans ce cas, avantageusement, en référence à la figure 11, le compteur de fluide à ultrasons 101 selon un deuxième mode de réalisation de l'invention comprend un capteur de température 120 du fluide. Le capteur de température 120 est ici positionné en amont du transducteur amont 7a. On remarque que les références de la figure 11 sont celles de la figure 1 augmentées de la valeur 100.

Dans le cas d'un fluide compressible, il est en effet impossible de corréler la perte de charge au débit sans connaître la température.

En effet, on sait que :

P.V = n.R.T, avec :

> P : la pression (Pa) ;
> V : le volume (m3) ;
> n : la quantité de matière (mol) ;
> R : la constante des gaz parfaits ($\approx$ 8,314 J/K/mol) ;
> T : la température absolue (K).

On a, à une température donnée :

$$Q = K \times \sqrt{\Delta P},$$

avec :

> $\Delta P$ : perte de pression ;
> Q : débit en litre par heure.

D'après la loi de *Gay-Lussac,* à volume constant, la pression d'une certaine quantité de gaz est directement proportionnelle à sa température absolue (P $\propto$ T) :

$$\frac{P1}{T1} = \frac{P2}{T2}$$

Par conséquent, une variation de pression pourra être due à une variation du débit ou à une variation de température, d'où l'importance de connaître la température absolue pour pouvoir corréler le débit à la perte de pression. Il est donc nécessaire d'intégrer un capteur de température dans le cas des gaz et d'effectuer les mesures à température constante (si un seul capteur de température).

Le circuit de traitement 105 utilise donc une sixième table de référence en quatre dimensions. Cette sixième table de référence correspond par exemple à la troisième table de référence 18, à laquelle on ajoute une quatrième dimension correspondant à la température. Bien entendu, l'invention n'est pas limitée aux modes de réalisation décrits mais englobe toute variante entrant dans le champ de l'invention telle que définie par les revendications.

L'invention s'applique bien sûr quels que soient le positionnement et la configuration du transducteur amont et du transducteur aval. Les signaux ultrasonores peuvent être émis avec une orientation d'un angle quelconque par rapport à un axe longitudinal du conduit.

Le chemin prédéfini entre les transducteurs n'est pas nécessairement un chemin direct. On voit sur la figure 12 un compteur de fluide à ultrasons selon un troisième mode de réalisation 201. La vanne à bille 212 est en position ouverte. Les signaux ultrasonores, émis et reçus dans le conduit 204 par les transducteurs 207a, 207b sont réfléchis par des réflecteurs 221, par exemple par des miroirs orientés à 45°.

L'invention ne s'applique bien sûr pas uniquement à un compteur d'eau, mais à tout compteur de tout fluide : gaz, pétrole, huile, médicament, etc.

La vanne n'est pas nécessairement une vanne à bille. Tout type de vanne peut être utilisé pour réguler le débit, par exemple une vanne à tiroir. La position de l'organe mobile, permettant de réguler le débit, n'est pas nécessairement une position angulaire mais peut être une position axiale.

Il est également possible que le compteur selon l'invention comporte un unique capteur de tension et un unique capteur de courant pour les deux transducteurs 7a, 7b.

**Annexe** :

Le tableau ci-dessous contient les coefficients utilisés dans l'équation de Belogol'skii et al.

| | |
|---|---|
| $a_{00}$ | 1402.38744 |

(suite)

| | |
|---|---|
| $a_{10}$ | 5.03836171 |
| $a_{20}$ | $-5.81172916 \times 10^{-2}$ |
| $a_{30}$ | $3.34638117 \times 10^{-4}$ |
| $a_{40}$ | $-1.48259672 \times 10^{-6}$ |
| $a_{50}$ | $3.16585020 \times 10^{-9}$ |
| $a_{01}$ | 1.49043589 |
| $a_{11}$ | $1.077850609 \times 10^{-2}$ |
| $a_{21}$ | $-2.232794656 \times 10^{-4}$ |
| $a_{31}$ | $2.718246452 \times 10^{-6}$ |
| $a_{02}$ | $4.31532833 \times 10^{-3}$ |
| $a_{12}$ | $-2.938590293 \times 10^{-4}$ |
| $a_{22}$ | $6.822485943 \times 10^{-6}$ |
| $a_{32}$ | $-6.674551162 \times 10^{-8}$ |
| $a_{03}$ | $-1.852993525 \times 10^{-5}$ |
| $a_{13}$ | $1.481844713 \times 10^{-6}$ |
| $a_{23}$ | $-3.940994021 \times 10^{-8}$ |
| $a_{33}$ | $3.939902307 \times 10^{-10}$ |

**Revendications**

1. Compteur de fluide (1) à ultrasons comportant :

   - un conduit (4) dans lequel un fluide peut circuler ;
   - un dispositif de mesure ultrasonique (6) comprenant un transducteur amont (7a) et un transducteur aval (7b) qui sont des transducteurs piézoélectriques et qui sont agencés pour émettre et recevoir des signaux ultrasonores dans le conduit, le dispositif de mesure ultrasonique étant agencé pour évaluer un débit courant du fluide à partir de temps de vol des signaux ultrasonores entre le transducteur amont et le transducteur aval ;
   - une vanne (12) positionnée, selon une longueur du conduit, entre le transducteur amont et le transducteur aval, la vanne comprenant un organe mobile (14) qui s'étend dans le conduit (4) et dont une position courante peut être commandée pour contrôler le débit courant du fluide ;
   - un capteur de position (15) agencé pour mesurer la position courante de l'organe mobile;

   **caractérisé en ce que**,
   le compteur de fluide comprend en outre:

   - un circuit de traitement (5) agencé pour, si la position courante de l'organe mobile est telle que le débit courant ne peut pas être mesuré par le dispositif de mesure ultrasonique, évaluer le débit courant en fonction de la position courante de l'organe mobile et d'une valeur de pression représentative d'une différence entre une deuxième pression du fluide dans le conduit en aval de la vanne et une première pression du fluide dans le conduit en amont de la vanne, la première pression étant évaluée à partir d'une première impédance électrique du transducteur amont et la deuxième pression étant évaluée à partir d'une deuxième impédance électrique du transducteur aval.

2. Compteur de fluide à ultrasons selon la revendication 1, dans lequel la première impédance électrique est une impédance électrique du transducteur amont (7a) à une fréquence d'excitation du transducteur amont (7a) et du transducteur aval (7b), et la deuxième impédance électrique est une impédance électrique du transducteur aval (7b) à ladite fréquence d'excitation.

3. Compteur de fluide à ultrasons selon la revendication 1, dans lequel le circuit de traitement (5) est agencé pour :

- exciter le transducteur amont (7a) à des fréquences comprises dans un premier intervalle de fréquences prédéterminé pour évaluer une première fonction de la première impédance en fonction de la fréquence sur ledit premier intervalle ;
- exciter le transducteur aval (7b) à des fréquences comprises dans un deuxième intervalle de fréquences prédéterminé pour évaluer une deuxième fonction de la deuxième impédance en fonction de la fréquence sur ledit deuxième intervalle ;
- évaluer à partir de la première fonction un premier décalage, par rapport à une première fréquence de référence, d'une première fréquence de résonance ou d'une première fréquence d'antirésonance du transducteur amont (7a) ;
- évaluer à partir de la deuxième fonction un deuxième décalage, par rapport à une deuxième fréquence de référence, d'une deuxième fréquence de résonance ou d'une deuxième fréquence d'antirésonance du transducteur aval (7b) ;
- évaluer à partir du premier décalage la première pression, et à partir du deuxième décalage la deuxième pression.

4. Compteur de fluide à ultrasons selon l'une des revendications précédentes, le circuit de traitement (5) étant agencé pour, si la position courante de l'organe mobile (14) est telle que le débit courant peut être mesuré par le dispositif de mesure ultrasonique (6) :

- évaluer une pression du fluide à débit nul ;
- estimer la température du fluide en utilisant la pression du fluide à débit nul ;
- produire une première valeur de débit à partir de temps de vol des signaux ultrasonores entre le premier transducteur et le deuxième transducteur et de la température du fluide.

5. Compteur de fluide à ultrasons selon la revendication 4, le circuit de traitement (5) étant en outre agencé pour :

- produire une deuxième valeur de débit à partir de la position courante de l'organe mobile et de la valeur de pression ;
- produire une valeur de débit consolidée à partir de la première valeur de débit et de la deuxième valeur de débit.

6. Compteur de fluide à ultrasons selon la revendication 4, dans lequel, pour évaluer la pression du fluide à débit nul, le circuit de traitement (5) est agencé pour :

- attendre que le débit courant soit nul ;
- évaluer alors la première pression à partir de la première impédance ou la deuxième pression à partir de la deuxième impédance.

7. Compteur de fluide à ultrasons selon l'une des revendications précédentes, le fluide étant un fluide compressible, le compteur de fluide (101) comprenant en outre un capteur de température (120) agencé pour mesurer une température du fluide dans le conduit (104), le circuit de traitement (105) étant agencé pour, si la position courante de l'organe mobile est telle que le débit courant ne peut pas être mesuré par le dispositif de mesure ultrasonique, utiliser aussi la température du fluide pour évaluer le débit courant.

8. Compteur de fluide à ultrasons selon l'une des revendications précédentes, dans lequel la vanne (12) est une vanne à bille.

9. Procédé de mesure d'un débit courant d'un fluide, mis en oeuvre dans le circuit de traitement (5) d'un compteur de fluide à ultrasons selon l'une des revendications précédentes, et comprenant l'étape, si la position courante de l'organe mobile est telle que le débit courant ne peut pas être mesuré par le dispositif de mesure ultrasonique (6), d'évaluer le débit courant en fonction de la position courante de l'organe mobile (14) et de la valeur de pression représentative de la différence entre la deuxième pression et la première pression.

10. Procédé de mesure selon la revendication 9, dans lequel la première impédance électrique est une impédance électrique du transducteur amont (7a) à une fréquence d'excitation du transducteur amont (7a) et du transducteur aval (7b), et la deuxième impédance électrique est une impédance électrique du transducteur aval (7b) à ladite fréquence d'excitation.

11. Procédé de mesure selon la revendication 9, comprenant les étapes de :

- exciter le transducteur amont (7a) à des fréquences comprises dans un premier intervalle de fréquences prédéterminé et évaluer une première fonction de la première impédance en fonction de la fréquence sur ledit premier intervalle ;
- exciter le transducteur aval (7b) à des fréquences comprises dans un deuxième intervalle de fréquences prédéterminé et évaluer une deuxième fonction de la deuxième impédance en fonction de la fréquence sur ledit deuxième intervalle ;
- évaluer à partir de la première fonction un premier décalage, par rapport à une première fréquence de référence, d'une première fréquence de résonance ou d'une première fréquence d'antirésonance du transducteur amont (7a) ;
- évaluer à partir de la deuxième fonction un deuxième décalage, par rapport à une deuxième fréquence de référence, d'une deuxième fréquence de résonance ou d'une deuxième fréquence d'antirésonance du transducteur aval (7b) ;
- et évaluer à partir du premier décalage la première pression, et à partir du deuxième décalage la deuxième pression.

12. Procédé de mesure selon l'une des revendications 9 à 11, comprenant les étapes, si la position courante de l'organe mobile (14) est telle que le débit courant peut être mesuré par le dispositif de mesure ultrasonique (6), de

- utiliser le dispositif de mesure ultrasonique (6) pour mesurer le débit courant ;
- attendre que le débit courant soit nul ;
- évaluer alors la première pression à partir de la première impédance ou la deuxième pression à partir de la deuxième impédance, et évaluer ainsi la pression du fluide à débit nul ;
- estimer la température du fluide en utilisant la pression du fluide à débit nul ;
- estimer une première valeur de débit à partir de temps de vol des signaux ultrasonores entre le premier transducteur et le deuxième transducteur et de la température du fluide.

13. Procédé de mesure selon la revendication 12 comprenant en outre les étapes de :

- produire une deuxième valeur de débit à partir de la position courante de l'organe mobile (14) et de la valeur de pression ;
- produire une valeur de débit consolidée à partir de la première valeur de débit et de la deuxième valeur de débit.

14. Procédé de mesure selon l'une des revendications 9 à 13, comprenant en outre les étapes de :

- définir un intervalle de temps entre un temps t1 et un temps t2, tels que, au temps t1, une différence entre la deuxième pression et la première pression passe d'une valeur nulle à une valeur supérieure à un seuil prédéfini, et au temps t2, la différence entre la deuxième pression et la première pression passe d'une deuxième valeur supérieure au seuil prédéfini à la valeur nulle
- intégrer le débit courant sur l'intervalle de temps et évaluer ainsi un volume de fluide distribué via le conduit (4) .

15. Programme d'ordinateur comprenant des instructions qui conduisent le circuit de traitement (5) du compteur selon l'une des revendications 1 à 8 à exécuter les étapes du procédé de mesure selon l'une des revendications 9 à 14.

16. Support d'enregistrement lisible par ordinateur, sur lequel est enregistré le programme d'ordinateur selon la revendication 15.

17. Procédé de régulation d'un débit courant, mis en oeuvre dans le circuit de traitement (5) d'un compteur de fluide à ultrasons selon l'une des revendications 1 à 8, et comprenant les étapes de :

- acquérir une consigne de débit ;
- estimer le débit courant en utilisant le procédé de mesure selon l'une des revendications 9 à 14 ;
- adapter la position courante de l'organe mobile en fonction d'un écart entre la consigne de débit et le débit courant.

**18.** Programme d'ordinateur comprenant des instructions qui conduisent le circuit de traitement du compteur (5) selon l'une des revendications 1 à 8 à exécuter les étapes du procédé de régulation selon la revendication 17.

**19.** Support d'enregistrement lisible par ordinateur, sur lequel est enregistré le programme d'ordinateur selon la revendication 18.

**Patentansprüche**

**1.** Ultraschall-Fluidzähler (1), umfassend:

- eine Leitung (4), in der ein Fluid zirkulieren kann;
- eine Ultraschallmessvorrichtung (6), die einen stromaufwärtigen Wandler (7a) und einen stromabwärtigen Wandler (7b) umfasst, die piezoelektrische Wandler und ausgebildet sind, Ultraschallsignale in die Leitung auszusenden und aus derselben zu empfangen, wobei die Ultraschallmessvorrichtung ausgebildet ist, einen aktuellen Durchsatz des Fluids anhand der Flugzeit der Ultraschallsignale zwischen dem stromaufwärtigen Wandler und dem stromabwärtigen Wandler zu evaluieren;
- ein Ventil (12), das gemäß einer Länge der Leitung zwischen dem stromaufwärtigen Wandler und dem stromabwärtigen Wandler positioniert ist, wobei das Ventil ein bewegliches Element (14) umfasst, das sich in der Leitung (4) erstreckt und von dem eine aktuelle Position gesteuert werden kann, um den aktuellen Durchsatz des Fluids zu kontrollieren;
- einen Positionssensor (15), der ausgebildet ist, die aktuelle Position des beweglichen Elements zu messen;

**dadurch gekennzeichnet, dass**
der Fluidzähler ferner umfasst:

- eine Verarbeitungsschaltung (5), die ausgebildet ist, um, wenn die aktuelle Position des beweglichen Elements derart ist, dass der aktuelle Durchsatz von der Ultraschallmessvorrichtung nicht gemessen werden kann, den aktuellen Durchsatz in Abhängigkeit von der aktuellen Position des beweglichen Elements und eines Druckwerts zu evaluieren, der repräsentativ für eine Differenz zwischen einem zweiten Druck des Fluids in der Leitung stromabwärts des Ventils und einem ersten Druck des Fluids in der Leitung stromaufwärts des Ventils ist, wobei der erste Druck anhand einer ersten elektrischen Impedanz des stromaufwärtigen Wandlers evaluiert wird und der zweite Druck anhand einer zweiten elektrischen Impedanz des stromabwärtigen Wandlers evaluiert wird.

**2.** Ultraschall-Fluidzähler nach Anspruch 1, bei dem die erste elektrische Impedanz eine elektrische Impedanz des stromaufwärtigen Wandlers (7a) bei einer Anregungsfrequenz des stromaufwärtigen Wandlers (7a) und des stromabwärtigen Wandlers (7b) ist, und die zweite elektrische Impedanz eine elektrische Impedanz des stromabwärtigen Wandlers (7b) bei der genannten Anregungsfrequenz ist.

**3.** Ultraschall-Fluidzähler nach Anspruch 1, bei dem die Verarbeitungsschaltung (5) ausgebildet ist, um:

- den stromaufwärtigen Wandler (7a) bei Frequenzen anzuregen, die in einem ersten vorbestimmten Frequenzintervall enthalten sind, um eine erste Funktion der ersten Impedanz in Abhängigkeit von der Frequenz über das genannte erste Intervall zu evaluieren;
- den stromabwärtigen Wandler (7b) bei Frequenzen anzuregen, die in einem zweiten vorbestimmten Frequenzintervall enthalten sind, um eine zweite Funktion der zweiten Impedanz in Abhängigkeit von der Frequenz über das genannte zweite Intervall zu evaluieren;
- anhand der ersten Funktion einen ersten Versatz, in Bezug auf eine erste Referenzfrequenz, einer ersten Resonanzfrequenz oder einer ersten Antiresonanzfrequenz des stromaufwärtigen Wandlers (7a) zu evaluieren;
- anhand der zweiten Funktion einen zweiten Versatz, in Bezug auf eine zweite Referenzfrequenz, einer zweiten Resonanzfrequenz oder einer zweiten Antiresonanzfrequenz des stromabwärtigen Wandlers (7b) zu evaluieren;
- anhand des ersten Versatzes den ersten Druck und anhand des zweiten Versatzes den zweiten Druck zu evaluieren.

**4.** Ultraschall-Fluidzähler nach einem der vorhergehenden Ansprüche, wobei die Verarbeitungsschaltung (5) ausgebildet ist, um, wenn die aktuelle Position des beweglichen Elements (14) derart ist, dass der aktuelle Durchsatz von der Ultraschallmessvorrichtung (6) gemessen werden kann:

- einen Druck des Fluids bei einem Null-Durchsatz zu evaluieren;
- die Temperatur des Fluids zu schätzen, indem der Druck des Fluids bei Null-Durchsatz verwendet wird;
- einen ersten Durchsatzwert anhand der Flugzeit der Ultraschallsignale zwischen dem ersten Wandler und dem zweiten Wandler und der Temperatur des Fluids zu erzeugen.

5. Ultraschall-Fluidzähler nach Anspruch 4, wobei die Verarbeitungsschaltung (5) ferner ausgebildet ist, um:

- einen zweiten Durchsatzwert anhand der aktuellen Position des beweglichen Elements und des Druckwerts zu erzeugen;
- einen konsolidierten Durchsatzwert anhand des ersten Durchsatzwerts und des zweiten Durchsatzwerts zu erzeugen.

6. Ultraschall-Fluidzähler nach Anspruch 4, bei dem zum Evaluieren des Drucks des Fluids bei Null-Durchsatz die Verarbeitungsschaltung (5) ausgebildet ist, um:

- zu warten, bis der aktuelle Durchsatz Null ist;
- dann den ersten Druck anhand der ersten Impedanz oder den zweiten Druck anhand der zweiten Impedanz zu evaluieren.

7. Ultraschall-Fluidzähler nach einem der vorhergehenden Ansprüche, wobei das Fluid ein komprimierbares Fluid ist, wobei der Fluidzähler (101) ferner einen Temperatursensor (120) umfasst, der ausgebildet ist, eine Temperatur des Fluids in der Leitung (104) zu messen, wobei die Verarbeitungsschaltung (105) ausgebildet ist, um, wenn die aktuelle Position des beweglichen Elements derart ist, dass der aktuelle Durchsatz von der Ultraschallmessvorrichtung nicht gemessen werden kann, auch die Temperatur des Fluids zu verwenden, um den aktuellen Durchsatz zu evaluieren.

8. Ultraschall-Fluidzähler nach einem der vorhergehenden Ansprüche, bei dem das Ventil (12) ein Kugelventil ist.

9. Verfahren zum Messen eines aktuellen Durchsatzes eines Fluids, das in der Verarbeitungsschaltung (5) eines Ultraschall-Fluidzählers nach einem der vorhergehenden Ansprüche durchgeführt wird, und umfassend den Schritt, wenn die aktuelle Position des beweglichen Elements derart ist, dass der aktuelle Durchsatz von der Ultraschallmessvorrichtung nicht gemessen werden kann, des Evaluierens des aktuellen Durchsatzes in Abhängigkeit von der aktuellen Position des beweglichen Elements (14) und des Druckwerts, der repräsentativ für die Differenz zwischen dem zweiten Druck und dem ersten Druck ist.

10. Verfahren zum Messen nach Anspruch 9, bei dem die erste elektrische Impedanz eine elektrische Impedanz des stromaufwärtigen Wandlers (7a) bei einer Anregungsfrequenz des stromaufwärtigen Wandlers (7a) und des stromabwärtigen Wandlers (7b) ist, und die zweite elektrische Impedanz eine elektrische Impedanz des stromabwärtigen Wandlers (7b) bei der genannten Anregungsfrequenz ist.

11. Verfahren zum Messen nach Anspruch 9, umfassend die Schritte:

- Anregen des stromaufwärtigen Wandlers (7a) bei Frequenzen, die in einem ersten vorbestimmten Frequenzintervall enthalten sind, und Evaluieren einer ersten Funktion der ersten Impedanz in Abhängigkeit von der Frequenz über das genannte erste Intervall;
- Anregen des stromabwärtigen Wandlers (7b) bei Frequenzen, die in einem zweiten vorbestimmten Frequenzintervall enthalten sind, und Evaluieren einer zweiten Funktion der zweiten Impedanz in Abhängigkeit von der Frequenz über das genannte zweite Intervall;
- Evaluieren anhand der ersten Funktion eines ersten Versatzes, in Bezug auf eine erste Referenzfrequenz, einer ersten Resonanzfrequenz oder einer ersten Antiresonanzfrequenz des stromaufwärtigen Wandlers (7a);
- Evaluieren anhand der zweiten Funktion eines zweiten Versatzes, in Bezug auf eine zweite Referenzfrequenz, einer zweiten Resonanzfrequenz oder einen zweiten Antiresonanzfrequenz des stromabwärtigen Wandlers (7b);
- und Evaluieren des ersten Drucks anhand des ersten Versatzes und des zweiten Drucks anhand des zweiten Versatzes.

12. Verfahren zum Messen nach einem der Ansprüche 9 bis 11, umfassend die Schritte, wenn die aktuelle Position des beweglichen Elements (14) derart ist, dass der aktuelle Durchsatz von der Ultraschall-Messvorrichtung (6) gemessen werden kann:

- Verwenden der Ultraschall-Messvorrichtung (6) zum Messen des aktuellen Durchsatzes;
- Abwarten, bis der aktuelle Durchsatz Null ist;
- dann Evaluieren des ersten Drucks anhand der ersten Impedanz oder des zweiten Drucks anhand der zweiten Impedanz, und so Evaluieren des Drucks des Fluids bei einem Null-Durchsatz;
- Schätzen der Temperatur des Fluids, indem der Druck des Fluids bei einem Null-Durchsatz verwendet wird;
- Schätzen eines ersten Durchsatzwerts anhand der Flugzeit der Ultraschallsignale zwischen dem ersten Wandler und dem zweiten Wandler und der Temperatur des Fluids.

**13.** Verfahren zum Messen nach Anspruch 12, ferner umfassend die Schritte:

- Erzeugen eines zweiten Durchsatzwerts anhand der aktuellen Position des beweglichen Elements (14) und des Druckwerts;
- Erzeugen eines konsolidierten Durchsatzwerts anhand des ersten Durchsatzwerts und des zweiten Durchsatzwerts.

**14.** Verfahren zum Messen nach einem der Ansprüche 9 bis 13, ferner umfassend die Schritte:

- Definieren eines Zeitintervalls zwischen einem Zeitpunkt t1 und einem Zeitpunkt t2, derart, dass zum Zeitpunkt t1 eine Differenz zwischen dem zweiten Druck und dem ersten Druck von einem Null-Wert auf einen Wert übergeht, der über einem vordefinierten Schwellenwert liegt, und zum Zeitpunkt t2 die Differenz zwischen dem zweiten Druck und dem ersten Druck von einem zweiten Wert, der über dem vordefinierten Schwellenwert liegt, zu dem Null-Wert übergeht
- Integrieren des aktuellen Durchsatzes über das Zeitintervall und so Evaluieren eines Fluidvolumens, das über die Leitung (4) verteilt wird.

**15.** Computerprogramm, umfassend Anweisungen, die die Verarbeitungsschaltung (5) des Zählers nach einem der Ansprüche 1 bis 8 dazu veranlassen, die Schritte des Verfahrens zum Messen nach einem der Ansprüche 9 bis 14 durchzuführen.

**16.** Computerlesbarer Aufzeichnungsträger, auf dem das Computerprogramm nach Anspruch 15 gespeichert ist.

**17.** Verfahren zum Regulieren eines aktuellen Durchsatzes, durchgeführt in der Verarbeitungsschaltung (5) eines Ultraschall-Fluidzählers nach einem der Ansprüche 1 bis 8, und umfassend die Schritte:

- Erfassen eines Durchsatzsollwerts;
- Schätzen des aktuellen Durchsatzes, indem das Verfahren zum Messen nach einem der Ansprüche 9 bis 14 verwendet wird;
- Anpassen der aktuellen Position des beweglichen Elements in Abhängigkeit von einem Unterschied zwischen dem Durchsatzsollwert und dem aktuellen Durchsatz.

**18.** Computerprogramm, umfassend Anweisungen, die die Verarbeitungsschaltung des Zählers (5) nach einem der Ansprüche 1 bis 8 dazu veranlassen, die Schritte des Verfahrens zum Regulieren nach Anspruch 17 auszuführen.

**19.** Computerlesbarer Aufzeichnungsträger, auf dem das Computerprogramm nach Anspruch 18 gespeichert ist.

**Claims**

**1.** An ultrasonic fluid meter (1) comprising:

a conduit (4) in which a fluid can flow;
an ultrasonic measuring device (6) comprising an upstream transducer (7a) and a downstream transducer (7b) which are piezoelectric transducers and which are configured to emit and receive ultrasonic signals in the conduit, the ultrasonic measuring device being configured to evaluate a current flow rate of the fluid from times of flight of the ultrasonic signals between the upstream transducer and the downstream transducer;
a valve (12) positioned along a length of the conduit between the upstream transducer and the downstream transducer, the valve comprising a movable member (14) which extends in the conduit (4) and for which a current position can be regulated in order to control the current flow rate of the fluid;
a position sensor (15) configured to measure the current position of the movable member;

**characterized in that** the fluid meter further comprises :
a processing circuit (5) which, if the current position of the movable member is such that the current flow rate cannot be measured by the ultrasonic measuring device, is configured to evaluate the current flow rate as a function of the current position of the movable member and of a pressure value which is representative of a difference between a second pressure of the fluid in the conduit downstream of the valve and a first pressure of the fluid in the conduit upstream of the valve, the first pressure being evaluated from a first electrical impedance of the upstream transducer and the second pressure being evaluated from a second electrical impedance of the downstream transducer.

2. The ultrasonic fluid meter according to claim 1, wherein the first electrical impedance is an electrical impedance of the upstream transducer (7a) at an excitation frequency of the upstream transducer (7a) and of the downstream transducer (7b), and the second electrical impedance is an electrical impedance of the downstream transducer (7b) at said excitation frequency.

3. The ultrasonic fluid meter according to claim 1, wherein the processing circuit (5) is configured to:

excite the upstream transducer (7a) at frequencies included in a first predetermined frequency range in order to evaluate a first function for the first impedance as a function of frequency over said first range;
excite the downstream transducer (7b) at frequencies included in a second predetermined frequency range in order to evaluate a second function for the second impedance as a function of frequency over said second range;
from the first function, evaluate a first offset with respect to a first reference frequency of a first resonance frequency or of a first antiresonance frequency of the upstream transducer (7a);
from the second function, evaluate a second offset with respect to a second reference frequency of a second resonance frequency or of a second antiresonance frequency of the downstream transducer (7b);
evaluate the first pressure from the first offset and the second pressure from the second offset.

4. The ultrasonic fluid meter according to any one of the preceding claims, the processing circuit (5) being configured, if the current position of the movable member (14) is such that the current flow rate can be measured by the ultrasonic measuring device (6), to:

evaluate a pressure of the fluid at zero flow rate;
estimate the temperature of the fluid by using the pressure of the fluid at zero flow rate;
produce a first flow rate value from the time of flight of the ultrasonic signals between the first transducer and the second transducer and from the temperature of the fluid.

5. The ultrasonic fluid meter according to claim 4, the processing circuit (5) furthermore being configured to:

produce a second flow rate value from the current position of the movable member and from the pressure value;
produce a consolidated flow rate value from the first flow rate value and from the second flow rate value.

6. The ultrasonic fluid meter according to claim 4, wherein, in order to evaluate the pressure of the fluid at zero flow rate, the processing circuit is configured to:

wait until the current flow rate becomes zero;
then evaluate the first pressure from the first impedance or the second pressure from the second impedance.

7. The ultrasonic fluid meter according to any one of the preceding claims, the fluid being a compressible fluid, the fluid meter (101) further comprising a temperature sensor (120) configured to measure a temperature of the fluid in the conduit (104), the processing circuit (105) being configured such that, if the current position of the movable member is such that the current flow rate cannot be measured by the ultrasonic measuring device, it also uses the temperature of the fluid to evaluate the current flow.

8. The ultrasonic fluid meter according to any one of the preceding claims, wherein the valve (12) is a ball valve.

9. A method for measuring a current flow rate of a fluid, carried out in the processing circuit (5) of an ultrasonic fluid meter according to any one of the preceding claims and, if the current position of the movable member is such that the current flow rate cannot be measured by the ultrasonic measuring device (6), comprising the step of evaluating the current flow rate as a function of the current position of the movable member (14) and of the pressure value which is representative of the difference between the second pressure and the first pressure.

10. The measurement method according to claim 9, wherein the first electrical impedance is an electrical impedance of the upstream transducer (7a) at an excitation frequency of the upstream transducer (7a) and of the downstream transducer (7b), and the second electrical impedance is an electrical impedance of the downstream transducer (7b) at said excitation frequency.

11. The measurement method according to claim 9, comprising the steps of:

exciting the upstream transducer (7a) at frequencies included in a first predetermined frequency range and evaluating a first function of the first impedance as a function of frequency over said first range;
exciting the downstream transducer (7b) at frequencies included in a second predetermined frequency range and evaluating a second function of the second impedance as a function of frequency over said second range;
from the first function, evaluate a first offset with respect to a first reference frequency of a first resonance frequency or of a first antiresonance frequency of the upstream transducer (7a);
from the second function, evaluate a second offset with respect to a second reference frequency of a second resonance frequency or of a second antiresonance frequency of the downstream transducer (7b);
evaluate the first pressure from the first offset and the second pressure from the second offset.

12. The measurement method according to any one of claims 9 to 11, wherein, if the current position of the movable member (14) is such that the current flow rate can be measured by the ultrasonic measuring device (6), it comprises the steps of

using the ultrasonic measuring device (6) to measure the current flow rate;
waiting until the current flow rate becomes zero;
then evaluating the first pressure from the first impedance or the second pressure from the second impedance, and thus evaluating the pressure of the fluid at zero flow rate;
estimate the temperature of the fluid by using the pressure of the fluid at zero flow rate;
estimating a first flow rate value from the time of flight of the ultrasonic signals between the first transducer and the second transducer and from the temperature of the fluid.

13. The measurement method according to claim 12, further comprising the steps of:

producing a second flow rate value from the current position of the movable member (14) and from the pressure value;
producing a consolidated flow rate value from the first flow rate value and from the second flow rate value.

14. The measurement method according to any one of claims 9 to 13, further comprising the steps of:

defining a time interval between a time t1 and a time t2, such that at time t1, a difference between the second pressure and the first pressure changes from a zero value to a value which is higher than a predefined threshold, and at time t2, the difference between the second pressure and the first pressure changes from a second value which is higher than the predefined threshold to the zero value,
integrating the current flow over the time interval and thus evaluating a volume of fluid distributed via the conduit (4).

15. A computer program comprising instructions which cause the processing circuit (5) of the meter according to any one of claims 1 to 8 to execute the steps of the measurement method as claimed in any one of claims 9 to 14.

16. Storage media which can be read by a computer, on which the computer program according to claim 15 is stored.

17. A method for regulating a current flow rate, which is carried out in a processing circuit (5) of an ultrasonic fluid meter according to any one of claims 1 to 8 and comprising the steps of:

acquiring a flow rate setpoint;

estimating the current flow rate using the measurement method according to any one of claims 9 to 14; adapting the current position of the movable member as a function of a difference between the flow rate setpoint and the current flow rate.

18. A computer program comprising instructions which cause the processing circuit of the meter (5) according to any one of claims 1 to 8 to execute the steps of the regulation method according to claim 17.

19. Storage media which can be read by a computer, on which the computer program according to claim 18 is stored.

Fig. 1

Fig. 2

Fig. 3

11

| | $D_1$ [L/h] | $D_2$ [L/h] | $D_3$ [L/h] | $D_4$ [L/h] |
|---|---|---|---|---|
| $T_1$ [°C] | $\Delta TOF_{11}$ | ... | ... | ... |
| $T_2$ [°C] | $\Delta TOF_{21}$ | $\Delta TOF_{22}$ | ... | ... |
| $T_3$ [°C] | $\Delta TOF_{31}$ | $\Delta TOF_{32}$ | $\Delta TOF_{33}$ | ... |

Fig. 4

Angle de $\pi/4 \pm k\pi/2$

Angle de $2\pi/5 \pm k\pi$

Angle de $\pi/2 \pm k\pi$ : 100% ouverte

$\Delta P$ [Pa]

Débit mesuré [L/h]

Fig. 5

Fig. 6

Fig. 7

|  | $D_1$ [L/h] | $D_2$ [L/h] | $D_3$ [L/h] | $D_4$ [L/h] |
|---|---|---|---|---|
| $\vartheta_1$ [rad] | $\Delta P_{11}$ | ... | ... | ... |
| $\vartheta_2$ [rad] | $\Delta P_{21}$ | $\Delta P_{22}$ | ... | ... |
| $\vartheta_3$ [rad] | $\Delta P_{31}$ | $\Delta P_{32}$ | $\Delta P_{33}$ | ... |

18

Fig. 8

Vitesse du son dans l'eau en fonction de la pression à 20°C

Fig. 9

Fig. 10

Fig. 11

Magnitude de l'impédance à 20°C

Fig. 12

Impédance en fonction de la pression à 20°C

Fig. 13

19

| Pression (bar) | 10°C | 20°C | 30°C |
|---|---|---|---|
| 1 | $\Omega_{11}, C_{11}$ | $\Omega_{12}, C_{12}$ | $\Omega_{13}, C_{13}$ |
| 1 | $\Omega_{21}, C_{21}$ | $\Omega_{22}, C_{22}$ | $\Omega_{23}, C_{23}$ |
| 1 | $\Omega_{31}, C_{31}$ | $\Omega_{32}, C_{32}$ | $\Omega_{33}, C_{33}$ |

Fig. 14

Vitesse du son dans l'eau en fonction de la pression

Fig. 15

Vitesse du son dans l'eau en fonction de la température

Fig. 16

Fig. 17

**EP 4 269 953 B1**

## RÉFÉRENCES CITÉES DANS LA DESCRIPTION

**Documents brevets cités dans la description**

- DE 102019105948 A1